Europäisches Patentamt

**European Patent Office**

Office européen des brevets

(19)

(11) Numéro de publication: **0 251 399**
**A1**

(12)

# DEMANDE DE BREVET EUROPEEN

(21) Numéro de dépôt: **87201186.1**

(22) Date de dépôt: **22.06.87**

(51) Int. Cl.4: **C22B 60/04** , C01G 56/00 ,
G21C 19/46

(30) Priorité: **23.06.86 BE 261001**

(43) Date de publication de la demande:
**07.01.88 Bulletin 88/01**

(84) Etats contractants désignés:
**BE DE FR GB IT SE**

(71) Demandeur: **"Centre d'Etude de l'Energie Nucléaire", "C.E.N."**
**Rue Charles Lemaire 1**
**B-1160 Bruxelles(BE)**

(72) Inventeur: **Baetsle, Léon Henri Joseph Marie**
**Berkvenstraat 98**
**B-2400 Mol(BE)**
Inventeur: **De Regge, Peter Paul Marie Honoré**
**Grenoblelaan 7**
**B-2400 Mol(BE)**
Inventeur: **Huys, Daniel Josef Germain**
**Begonialaan 41**
**B-2400 Mol(BE)**
Inventeur: **Nemoto, Shinichi**
**40-1 Higashi-go Nukada Nakamachi**
**Naka-gun Ibaraki(JP)**

(74) Mandataire: **Debrabandere, René et al**
**Vereenigde Octrooibureaux Belgie N.V.**
**Charlottalei 48**
**B-2018 Antwerpen(BE)**

(54) **Procédé de séparation ou de récupération de plutonium et plutonium ainsi obtenu.**

(57) On soumet une solution d'un mélange de plutonium et d'uranium et/ou d'au moins un élément transplutonien comme l'américium, dans de l'acide nitrique, à une extraction liquide/liquide à l'aide d'une solution de phosphate de tributyle dans un diluant. On ajoute ensuite à la phase organique chargée de plutonium, après lavage, une solution aqueuse d'acide oxalique et d'acide nitrique et on récupère le plutonium précipité sous forme d'oxalate.

## "Procédé de séparation ou de récupération de plutonium et plutonium ainsi obtenu".

L'invention concerne un procédé de séparation ou de récupération de plutonium à partir d'un mélange contenant ce plutonium ainsi que de l'uranium et/ou au moins un élément transplutonien, en particulier de l'américium, selon lequel on soumet une solution aqueuse contenant ce mélange à une extraction liquide/liquide à l'aide d'une solution organique non miscible à l'eau,après quoi on sépare le plutonium de la solution organique.

L'invention concerne en particulier la récupération du plutonium de son mélange avec de larges quantités d'américium (III) et la séparation du plutonium (IV) comprenant de petites quantités d'uranium (VI) de son mélange avec de larges quantités d'uranium (VI).

L'invention concerne entre autres la récupération de plutonium à partir de l'oxyde de plutonium ayant été stocké pendant un temps assez long et qui comprend du $^{214}$Am en tant que produit de désintégration et des produits provenant de l'emballage et résultant de la corrosion ou de la radiolyse de ce dernier.

Les procédés de séparation et/ou de récupération de plutonium par extraction liquide/liquide sont particulièrement indiqués pour traiter de larges quantités de plutonium par opposition aux procédés de séparation et de récupération par échangeurs d'ions, qui ne sont utili sables que pour de petites quantités de plutonium. En effet, dans ces derniers procédés, un échangeur anionique est généralement utilisé. Le plutonium (IV) forme dans de l'acide nitrique concentré des complexes de nitrate de plutonium qui demeurent dans la colonne de l'échangeur tandis que l'américium (III) et l'uranium (VI) traversent la colonne. Des complexes nitriques sont cependant formés entre l'échangeur d'ions et l'acide nitrique concentré, ce qui empêche le traitement de larges quantités de plutonium par l'échangeur.

Un procédé connu du genre susdit de traitement de plutonium par extraction liquide/ liquide est le procédé dit "Purex".

Selon ce procédé, on extrait tout d'abord continuellement à contre-courant l'uranium et le plutonium à l'aide de phosphate de tributyle dissous dans un diluant organique, à partir d'une solution d'acide nitrique de départ contenant le plutonium. La séparation du plutonium et de l'uranium se fait ensuite par réduction du plutonium (IV) en du plutonium trivalent insoluble dans la solution organique de phosphate de tributyle (TBP).

Cette réduction du plutonium peut se faire à l'aide d'agents réducteurs comme du Fe (II) stabilisé par du sulfamate ou de l'U(IV) stabilisé par de l'hydrazine.

Il s'est avéré qu'un excès important de ces agents réducteurs est nécessaire pour obtenir une séparation acceptable du plutonium. Cet excès d'agent réducteur a un effet négatif sur la performance du procédé. L'excès d'agent réducteur Fe (II) stabilisé au sulfamate, par exemple, a pour résultat un volume de déchets accru et, étant donné que U (IV) ne peut pas être extrait aussi bien que U (VI) l'utilisation d'excès d'U (IV) augmente les quantités d'uranium dans le plutonium.

Le même désavantage est obtenu en remplaçant la réduction par agents réducteurs par une réduction électrochimique. Une quantité importante d'U(IV) est réduite avec du plutonium (IV) dans la phase de séparation.

Pour ces raisons on a déjà essayé d'utiliser comme agent réducteur du nitrate d'hydroxylamine (NHA), étant donné que cet agent peut être décomposé sous forme de gaz et d'eau. Cet agent n'a cependant pu être utilisé avec succès que pour les cycles de séparation et de purification dans lesquels la concentration en acide nitrique est relativement petite.

Dans tous ces procédés connus où une réduction du plutonium est effectuée, une réoxydation est nécessaire à la fin du procédé pour réoxyder le plutonium (III) en plutonium (IV).

L'utilisation d'un procédé analogue a également été essayée pour extraire du plutonium d'une solution d'un mélange de plutonium et d'américium dans de l'acide nitrique.

Il a cependant été impossible de trouver une technique utilisable pour extraire l'américium de la solution d'acide nitrique étant donné que sous les mêmes conditions le plutonium (IV) est extrait aussi facilement que l'américium (III).

L'invention a pour but de remédier à ces inconvénients et de procurer un procédé simple et efficace du genre en question pour séparer ou récupérer du plutonium à partir d'un mélange contenant ce plutonium ainsi que de l'uranium et/ou au moins un élément transplutonien, en particulier de l'américium.

Dans ce but on sépare le plutonium de la phase organique obtenue après extraction par addition d'une solution aqueuse d'acide oxalique aussi bien en tant qu'agent d'extraction vers une phase aqueuse qu'en tant qu'agent de précipitation, après quoi on récupère l'oxalate de plutonium ainsi formé et précipité.

Il est connu en soi d'utiliser de l'acide oxalique pour précipiter le plutonium d'une solution de plutonium. La plupart de ces procédés sont cependant appliqués directement sur la solution aqueuse de plutonium dans de l'acide nitrique et non pas simultanément avec une extraction liquide/liquide.

Lors de l'addition d'une solution d'acide oxalique à la solution de plutonium, non seulement le plutonium mais également l'américium forment de l'oxalate qui est précipité. Il est donc impossible d'obtenir un facteur élevé de décontamination pour l'américium selon ce procédé.

L'utilisation de l'acide oxalique pour précipiter le plutonium d'une solution est décrite dans FR-A-2 523 156.

Ce traitement par l'acide oxalique est cependant appliqué sur les courants de déchets déjà débarassés de la plupart du plutonium.

En particulier, le traitement à l'acide oxalique est intégré au procédé "Purex" susdit, c'est à dire donc que l'extraction vers la phase aqueuse du plutonium de la solution de TBP se fait à l'aide d'un agent réducteur.

La précipitation à l'acide oxalique est appliquée sur les déchets obtenus par le procédé "Purex".

Non seulement le plutonium mais également d'autres produits de fission sont précipités en même temps par l'acide oxalique. Le plutonium doit être séparé ensuite de ces autres produits.

La récupération de plutonium à partir d'une solution de nitrate de plutonium dans un solvant organique, par exemple obtenue par extraction de plutonium dans un solvant organique tel que le phosphate de tributyle est connue en soi de GB-A-834 531.

Ce procédé n'est cependant pas appliqué pour séparer ou récupérer du plutonium à partir de son mélange avec de l'uranium ou des éléments transplutoniens, mais bien pour récupérer le plutonium de scories de fluorure, obtenues lors de la préparation de plutonium métallique.

Ce procédé connu est donc appliqué dans un autre domaine que l'invention qui concerne le traitement d'un mélange de plutonium et d'uranium et/ou un mélange de plutonium et d'un élément transplutonien. De tels mélanges sont obtenus dans une centrale nucléaire, dans les usines de retraitement du combustible nucléaire, et dans les usines de fabrication de combustible nucléaire à base d'oxydes mixtes. Le pourcentage de plutonium dans un tel mélange est beaucoup plus élevé que dans des scories.

La concentration élevée de plutonium dans le mélange de départ est d'ailleurs telle qu'après l'extraction liquide/liquide effectuée de manière usuelle, la concentration de plutonium dans la phase organique est dans beaucoup de cas supérieure à 20 g/l.

Dans ces cas l'application du procédé selon l'invention telle que mentionnée ci-devant ne donne pas de bons résultats si on ne prend pas de mesures spéciales.

Selon l'invention il faut dans ces cas qu'on dilue la phase organique chargée de plutonium obtenue par l'extraction liquide/liquide jusqu'à ce que la concentration de plutonium dans la phase organique soit inférieure à 20 g/l avant de précipiter le plutonium.

De préférence on dilue, dans le cas où la phase organique comprend plus de 10 g/l de plutonium, cette phase organique jusqu'à ce que la concentration de plutonium dans cette phase soit inférieure à environ 10 g/l avant de précipiter le plutonium.

Dans une forme de réalisation particulière de l'invention, on sépare le plutonium de la solution organique par addition d'un mélange d'acide oxalique et d'acide nitrique après quoi on récupère l'oxalate de plutonium précipité.

Dans une forme de réalisation remarquable de l'invention, on applique l'extraction liquide/liquide à une solution aqueuse de plutonium comprenant de l'acide nitrique.

Dans une forme de réalisation avantageuse de l'invention, on sèche l'oxalate de plutonium récupéré et on le transforme par échauffement en oxyde de plutonium.

L'invention concerne également le plutonium obtenu par application du procédé selon l'une ou l'autre des formes de réalisation mentionnées ci-dessus.

D'autre particularités et avantages de l'invention ressortiront de la description d'un procédé de séparation ou de récupération de plutonium et du plutonium ainsi obtenu, selon l'invention ; cette description n'est donnée qu'à titre d'exemple non limitatif.

Selon l'invention on traite du plutonium présent dans un mélange contenant de l'uranium et/ou au moins un élément transplutonien tel que l'américium. On traite par exemple de l'oxyde de plutonium provenant d'une centrale nucléaire et ayant été stocké pendant un certain temps.

Si le plutonium susdit ne se trouve pas sous forme dissoute dans de l'acide nitrique, on prépare d'abord une telle solution aqueuse.

Une solution efficace est une solution du plutonium, par exemple sous forme de nitrate, dans du 4 M $HNO_3$ .

Si nécessaire, on ajuste la valence du plutonium à IV en ajoutant du $NaNO_2$.

3

On soumet cette solution aqueuse chargée de plutonium à une extraction liquide/liquide en contre-courant à l'aide d'une solution organique de phosphate de tributyle (TBP) dans un diluant tel que le n-dodécane. On utilise à cet effet des unités mélangeur-décanteur ("mixer-settler"), ou des colonnes à pulsation ("pulsed column"). Le plutonium et l'uranium se retrouvent dans la phase organique tandis que l'américium éventuel ou d'autres impuretés demeurent dans la phase aqueuse.

On soumet la phase organique chargée de plutonium et éventuellement d'uranium à un nombre de lavages avec de l'acide nitrique de manière à obtenir un facteur de décontamination élevé pour l'américium ou d'autres impuretés.

Dans la plupart des cas, la concentration de plutonium dans la phase organique est supérieure à 20 g/l ou la concentration de plutonium et d'uranium ensemble est supérieure à 45 g/l.

Dans ces cas, on dilue la solution de TBP chargée et lavée à l'aide d'une solution de TBP de même concentration afin de maintenir la concentration de plutonium en-dessous de 20 g/l et de préférence égale à ou en-dessous de 10 g/l et de maintenir, le cas échéant, la concentration de plutonium et d'uranium ensemble en-dessous de 45 g/l.

Afin d'extraire le plutonium de la solution de TBP diluée et chargée de plutonium vers une phase aqueuse, on ajoute à cette solution un mélange aqueux d'acide oxalique et d'acide nitrique.

Un mélange efficace à cet effet est une solution 0,5 M acide oxalique / 1,0 M acide nitrique.

Le plutonium est extrait de la phase organique TBP et précipité dans la phase aqueuse sous forme d'oxalate de plutonium.

L'oxalate précipité est obtenu sous forme d'oxalate de plutonium pur ou le cas échéant précipité eventuellement avec une petite quantité d'oxalate d'uranium. Le reste d'uranium éventuel demeure en solution dans les phases organique et aqueuse.

Quand la concentration de plutonium dans la phase TBP est supérieure à 20 g/l beaucoup de précipité fin de plutonium est dispersé dans la phase organique et n'est pas transféré à la phase aqueuse avant longtemps. Quand la concentration de plutonium est par contre de l'ordre de 10 g/l il faut 5 à 10 minutes, y compris le temps de mélange des solutions, pour former le précipité et rendre clair la phase TBP.

Plus de 99 % du plutonium est ainsi précipité sous forme d'oxalate de plutonium.

On aspire cet oxalate précipité du fond de l'appareil dans lequel on a effectué cette précipitation et on l'isole par filtration.

La solution aqueuse d'extraction vers une phase aqueuse et ayant servi également à la précipitation est recyclée dans l'appareil susdit.

On lave l'oxalate de plutonium ainsi obtenu à l'aide d'un mélange frais d'acide oxalique et d'acide nitrique. On sèche l'oxalate de plutonium lavé.

On peut ensuite convertir l'oxalate de plutonium sec en du dioxyde de plutonium dans un four par des techniques conventionnelles.

Les expériences ont confirmé que la solution aqueuse composée d'acide oxalique et d'acide nitrique peut être utilisée aussi bien pour précipiter le plutonium de la phase TBP que pour l'extraction de retour du plutonium.

En cas de présence d'américium dans le produit de départ, un facteur de décontamination elevé pour cet américium a été obtenu.

En cas de présence d'uranium dans le produit de départ, une grande partie de cet uranium a également été séparée du plutonium et se retrouve dans la phase TBP.

Un degré elevé de récupération de plutonium du produit de départ a pu être obtenu.

L'invention sera illustrée plus en détail à l'aide des exemples suivants.

EXEMPLE 1.

On prépare une solution initiale de plutonium en ajoutant un mélange de 187 g/l de plutonium avec 9 250 à 10 360 MBq/l (250 à 280 mCi/l) d'américium dans une solution d'acide nitrique (4 M).

On extrait le plutonium de cette solution de départ par une extraction liquide/liquide à l'aide d'une solution organique de 15 % en volume de TBP dans du n-dodécane.

On obtient dans la phase organique 32,5 g/l de plutonium et dans la phase aqueuse 8,40 g/l de plutonium. Le coefficient de distribution du plutonium est donc de 3,87. Le coefficient de distribution pour l'américium est de $5,02 \times 10^{-3}$, 44 MBq/l (1,2 mCi/l) d'américium se trouvant dans la phase organique et 8 843 MBq/l (239 mCi/l) dans la phase aqueuse.

On dilue la phase organique de TBP chargée de plutonium à l'aide d'une solution similaire de TBP dans du n-dodécane déjà équilibrée avec l'agent d'extraction de retour et de précipitation mentionné ci-après, jusqu'à ce que la concentration de plutonium déscende à 10,8 g/l.

On met directement en contact la solution diluée de TBP avec un même volume d'une solution aqueuse de 0,5 M acide oxalique et 1,0 M acide nitrique en tant qu'agent d'extraction de retour et de précipitation.

On agite pendant 10 minutes.

On récupère l'oxalate de plutonium formé et précipité à l'aide d'un filtre.

Après filtration, la concentration de plutonium est de 32 mg/l dans la phase aqueuse et inférieure à 0,01 mg/l dans la phase organique.

$1,1 \times 10^{-4}$ % du plutonium est resté dans la phase organique et 0,31 % du plutonium n'a pas été précipité de la phase aqueuse.


EXEMPLE 2.

On répète l'exemple 1 mais en employant comme liquide d'extraction, au lieu d'une solution de 15% en volume de TBP dans du n-dodécane, une solution de 20% en volume de TBP dans du n-dodécane et après extraction on dilue la phase TBP jusqu'à une concentration de plutonium de 10,4 g/l au lieu de 10,8 g/l.

Après l'extraction, la concentration du plutonium est de 36,5 g/l dans la phase organique et de 4,66 g/l dans la phase aqueuse. Le coefficient de distribution du plutonium est donc de 7,83. La quantité d'américium est de 74 MBq/l (2,0 mCi/l) dans la phase organique et de 10 027 MBq/ (271 mCi/l) dans la phase aqueuse et le coefficient de distribution de l'américium est de $7,38 \times 10^{-3}$.

Après filtration, la concentration du plutonium demeurant dans la phase aqueuse est de 32 mg/l et celle demeurant dans la phase organique est inférieure à 0,011 mg/l.


EXEMPLE 3.

On répète l'exemple 1 avec un pourcentage de 30 % en volume de TBP dans la solution à l'aide de laquelle on extrait le plutonium et on dilue cette solution chargée de 61,2 g/l de plutonium jusqu'à une concentration de 12,2 g/l

Après filtration, la concentration du plutonium est de 32 mg/l dans la phase aqueuse et inférieure à 0,01 mg/l dans la phase organique.

Il ressort des exemples 1 à 3 que la concentration de TBP dans la solution utilisée pour l'extraction peut varier librement de 15 à 30 % en volume.


EXEMPLE 4.

On prépare une solution de départ de 146 g/l de Pu avec 791,8 GBq/l (21,4 Ci/l) d' $^{241}$Am dans une solution d'acide nitrique 4 M.

On ajuste la valence du Pu jusqu'à IV en ajoutant du $NaNO_2$.

On soumet la solution de plutonium à une extraction liquide/liquide à l'aide d'une solution de 20% en volume de TBP dans du n-dodécane.

On lave trois fois la solution organique de TBP comprenant 23,6 g/l de plutonium à l'aide d'acide nitrique 5 M.

Les concentrations du plutonium et de l'américium, les coefficients de distribution (CD) de ces éléments et le facteur de décontamination (FD) de l'américium sont donnés dans le tableau figurant ci-dessous.

| APRES | PLUTONIUM | | | AMERICIUM | | | FD Am |
|---|---|---|---|---|---|---|---|
| | phase org. g/l | phase aq. g/l | CD org./ aq. | phase org. MBq/l | phase aq. MBq/l | CD org./ aq. x10-5 | |
| Extract. | 23,6 | 4,61 | 5,12 | 3374 | 7474 x $10^2$ | 445 | 38 |
| Lavage 1 | 24,5 | 1,80 | 14,4 | 1158 | 85766 | 1350 | 115 |
| Lavage 2 | 23,6 | 1,63 | 14,5 | 939,8 | 16335 | 5750 | 136 |
| Lavage 3 | 22,3 | 1,58 | 14,1 | 36,04 | 4384 | 882 | |
| Précipit. | 7,66 x10$^{-5}$ | 4770 x10$^{-5}$ | 161 x10$^{-5}$ | 3,241 | 15,15 | 21800 | 2220 |

On dilue trois fois la phase TBP chargée de plutonium avec une solution de TBP ayant la même concentration en TBP jusqu'à ce que la concentration du plutonium soit à peu près égale à 10 g/l, et on met le tout en contact avec une solution d'acide oxalique (0,5 M) et d'acide nitrique(1,0 M).

On agite le tout pendant 10 minutes et on enlève l'oxalate de plutonium précipité par filtration.

On obtient ainsi de l'oxalate de plutonium possédant une concentration de 2,442 MBq/l (0,066 mCi/g) de américium 241.

Le facteur de décontamination pour l'américium est de 2.220.

Les quantités de plutonium et d'américium demeurant dans les solutions après précipitation sont données dans le tableau figurant ci-dessus.

On convertit l'oxalate de plutonium dans un four en de l'oxyde de plutonium. Ainsi on obtient à partir de 3,319 g d'oxalate de plutonium 2,31 g d'oxyde de plutonium.

Plus de 99 % du plutonium est précipité par la solution d'acide oxalique et d'acide nitrique et récupéré de la phase de TBP diluée contenant environ 10 g/l de plutonium.

EXEMPLE 5.

On répète l'exemple 4 mais en partant d'une solution de départ comprenant 149 g/l de Pu et 595,7 GBq/l (16,1 Ci/l) d'$^{241}$Am dissous dans de l'acide nitrique.

Les concentrations en plutonium et en américium, les coefficients de distribution de ces éléments et le facteur de décontamination de l'américium sont donnés dans le tableau figurant ci-après.

| APRES | PLUTONIUM | | | AMERICIUM | | | FD Am |
|---|---|---|---|---|---|---|---|
| | phase org. g/l | phase aq. g/l | CD org./ aq. | phase org. MBq/l | phase aq. MBq/l | CD org./ aq. x10$^{-5}$ | |
| Extract. | 23,9 | 5,6 | 4,26 | 298,9 | $5957$ $x\ 10^{2}$ | 502 | 32,0 |
| Lavage 1 | 22,3 | 4,86 | 4,59 | 543,9 | 87460 | 622 | 164 |
| Lavage 2 | 25,2 | 4,21 | 5,99 | 736,3 | 10619 | 6930 | 137 |
| Lavage 3 | 23,0 | 3,47 | 6,63 | 72,15 | 1398,6 | 5950 | 1300 |
| Précipit. | $2,95$ $x10^{-3}$ | $39,0$ $x10^{-3}$ | $75,6$ $x10^{-3}$ | 25,9 | 8,806 | | 2038 |

Après précipitation, on obtient de l'oxalate de plutonium comprenant 1,961 MBg/g (0,053 mCi/g) d'américium.

La transformation de 3,1404 g d'oxalate en oxyde donne 2,03 g d'oxyde de plutonium.

EXEMPLE 6.

On répète l'exemple 4 mais en partant d'une solution de départ comprenant 149 g/l de plutonium et 595,7 GBq/l (16,1 Ci/l) d'$^{241}$Am dissous dans de l'acide nitrique 4 M.

Les concentrations de plutonium et d'américium dans ces solutions, le coefficient de distribution de ces éléments et le facteur de décontamination de l'américium sont donnés dans le tableau figurant ci-après.

| APRES | PLUTONIUM | | | AMERICIUM | | | FD Am |
|---|---|---|---|---|---|---|---|
| | phase org. g/l | phase aq. g/l | CD org./aq. | phase org. MBq/l | phase aq. MBq/l | CD org./aq. x10⁻⁵ | |
| Extract. | 19,5 | 9,3 | 2,10 | 2127,5 | $5883 \times 10^2$ | 362 | 36,7 |
| Lavage 1 | 77,3 | 7,16 | 3,11 | 543,9 | 92389 | 589 | 16,4 |
| Lavage 2 | 20,0 | 5,79 | 3,45 | 207,2 | 15799 | 1310 | 38,6 |
| Lavage 3 | 22,8 | 4,83 | 4,92 | 91,39 | 2290,3 | 3990 | 998 |
| Précipit. | $4,32 \times 10^{-3}$ | $75 \times 10^{-3}$ | $57,6 \times 10^{-3}$ | | 9,657 | | 1740 |

Après précipitation, on obtient de l'oxalate de plutonium comprenant 2,257 MBq/l (0,061 mCi/g) d'américium. Le facteur de décontamination de l'américium est de 1.740.

3,0625 g d'oxalate de plutonium donne après transformation dans un four 1,88 g d'oxyde de plutonium.

EXEMPLE 7.

On dissout 60 g/l de plutonium et 140 g/l d'uranium dans du 4 M $HNO_3$. La quantité de plutonium est de 30 % en poids par rapport à l'ensemble de plutonium et d'uranium.

On soumet cette solution aqueuse à une extraction liquide/liquide à l'aide de 30 % en volume de TBP dans du n-dodécane qu'on utilise comme agent extracteur aussi bien pour le plutonium que pour l'uranium.

On dilue la solution de TBP chargée de plutonium et d'uranium par une solution fraîche de TBP jusqu'à ce que la concentration de plutonium et d'uranium ensemble soit inférieure à 45 g/l.

On met cette solution diluée en contact avec une solution aqueuse de 0,5 M d'acide oxalique et de 1,0 M d'acide nitrique et on agite le tout pendant 10 minutes.

Le plutonium est précipité sous forme d'oxalate ensemble avec une petite partie de l'uranium. La plus grande partie de l'uranium demeure dans les phases aqueuse et organique.

Le rapport entre la quantité d'uranium et la quantité totale de plutonium et d'uranium - [U/(U + Pu)]-du précipité est inférieur à 0,06.

EXEMPLE 8.

On répète l'exemple 7 en partant d'une solution de départ comprenant 20 g/l de plutonium et 180 g/l d'uranium dans de l'acide nitrique.

Le rapport entre la quantité d'uranium et la quantité de plutonium et d'uranium -[U/(U + Pu)]-dans l'oxalate de plutonium précipité est inférieur à 0,30.

EXEMPLE 9.

On répète l'exemple 7 mais en partant d'une solution nitrique de départ comprenant 3 g/l de plutonium et 197 g/l d'uranium.

Le rapport entre l'uranium et l'ensemble de plutonium et d'uranium dans le précipité -[U/(U + Pu)]- obtenu après précipitation est inférieur à 0,5.

Il ressort des exemples 1 à 6 que le procédé selon l'invention peut être appliqué efficacement pour récupérer le plutonium de son mélange avec l'américium.

La séparation de plutonium avec de petites quantités d'uranium à partir d'un mélange de plutonium et d'uranium est également possible selon l'invention, comme le démontrent les exemples 7 et 9.

Le procédé selon l'invention peut donc remplacer avantageusement les techniques conventionnelles telles que la réduction-oxydation du plutonium par U (IV), NHA, Fe(II) ou par des méthodes électrochimiques.

Le plutonium est non seulement séparé de l'américium ou de l'uranium mais également d'autres impuretés.

L'invention n'est nullement limitée aux formes de réalisation de l'invention décrites ci-devant et bien des modifications peuvent y être apportées sans sortir du cadre de la présente demande de brevet.

## Revendications

1. Procédé de séparation ou de récupération de plutonium, à partir d'un mélange contenant ce plutonium ainsi que de l'uranium et/ou au moins un élément transplutonien, selon lequel on soumet une solution aqueuse contenant ce mélange à une extraction liquide/liquide à l'aide d'une solution organique non miscible à l'eau, après quoi on sépare le plutonium de cette solution organique, caractérisé en ce qu'on sépare le plutonium de la phase organique obtenue après extraction par addition d'une solution aqueuse d'acide oxalique aussi bien en tant qu'agent d'extraction vers une phase aqueuse qu'en tant qu'agent de précipitation, après quoi on isole l'oxalate de plutonium ainsi formé et précipité.

2. Procédé selon la revendication 1, caractérisé en ce qu'on obtient par l'extraction liquide/liquide une phase organique possédant une concentration de plutonium supérieure à 20 g/l et qu'on dilue cette phase organique chargée de plutonium jusqu'à ce que la concentration de plutonium dans cette phase soit inférieure à 20g/l avant de précipiter le plutonium.

3. Procédé selon la revendication 1, caractérisé en ce qu'on obtient par l'extraction liquide/liquide une phase organique, possédant une concentration de plutonium supérieure à 10 g/l et qu'on dilue cette phase organique chargée de plutonium jusqu'à ce que la concentration de plutonium dans cette phase soit inférieure à 10 g/l avant de précipiter le plutonium.

4. Procédé selon l'une ou l'autre des revendications 2 et 3, caractérisé en ce qu'on sépare du plutonium de l'uranium à partir d'un mélange comprenant du plutonium et de l'uranium, qu'on obtient par l'extraction liquide/liquide une phase organique comprenant une concentration de plutonium et d'uranium ensemble supérieure à 45 g/l et qu'on dilue cette phase organique chargée de plutonium jusqu'à ce que la concentration de Pu et U ensemble dans cette phase soit inférieure à 45 g/l avant de précipiter le plutonium.

5. Procédé selon l'une ou l'autre des revendications 1 à 4, caractérisé en ce qu'on sépare le plutonium de la phase organique par addition d'un mélange aqueux d'acide oxalique et d'acide nitrique après quoi on récupère l'oxalate de plutonium précipité.

6. Procédé selon la revendication 5, caractérisé en ce qu'on sépare le plutonium de la phase organique par addition d'un mélange aqueux de 0,5 M d'acide oxalique et de 1,0 M d'acide nitrique.

7. Procédé selon l'une ou l'autre des revendications 1 à 6, caractérisé en ce qu'on applique l'extraction liquide/liquide à une solution aqueuse du plutonium comprenant de l'acide nitrique.

8. Procédé selon l'une ou l'autre des revendications 1 à 7, caractérisé en ce qu'on lave au moins une fois la phase organique après l'extraction liquide/liquide à l'aide d'acide nitrique.

9. Procédé selon l'une ou l'autre des revendications 1 à 8, caractérisé en ce qu'on effectue l'extraction liquide/liquide à l'aide d'une solution organique de phosphate de tributyle dans un diluant organique.

10. Procédé selon la revendication 9, caractérisé en ce qu'on effectue l'extraction liquide/liquide à l'aide d'une solution de phosphate de tributyle dans un diluant comprenant entre 15 et 30 % en volume de phosphate de tributyle.

11. Procédé selon l'une ou l'autre des revendications 1 à 10, caractérisé en ce qu'on sèche l'oxalate de plutonium précipité et on le transforme par échauffement en oxyde de plutonium.

12. Procédé de séparation et/ou de récupération de plutonium tel que décrit ci-devant.

13. Plutonium obtenu par le procédé selon l'une ou l'autre des revendications précédentes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | LU-A- 84 016 (EURATOM)<br>* En entier *<br><br>--- | 1-13 | C 22 B 60/04<br>C 01 G 56/00<br>G 21 C 19/46 |
| X | GB-A- 822 290 (U.K.A.E.A.)<br><br>* En entier *<br><br>--- | 7,9,10<br>,12,13 | |
| X | US-A-3 533 757 (J.C. BOUDRY)<br><br>* Revendications; colonne 3 *<br><br>--- | 1-4,7-<br>10,12,<br>13 | |
| X,D | GB-A- 834 531 (U.K.A.E.A.)<br><br>* Revendications *<br><br>--- | 1,5-7,<br>9,10,<br>12,13 | |
| A | CHEMICAL ABSTRACTS, vol. 104, 1986, page 499, résumé no. 232503k, Columbus, Ohio, US; V.K. RAO et al.: "Precipitation of plutonium oxalate from homogeneous solutions", & J. RADIOANAL. NUCL. CHEM. 1986, 100(1), 129-34<br><br>--- | 11 | |
| A | FR-A-2 536 898 (KERNFORSCHUNGSZENTRUM KARLSRUHE GmbH)<br><br>---    -/- | | |

DOMAINES TECHNIQUES RECHERCHES (Int. Cl.4)

C 22 B
C 01 G
G 21 C

Le présent rapport de recherche a été établi pour toutes les revendications

| Lieu de la recherche | Date d'achèvement de la recherche | Examinateur |
|---|---|---|
| LA HAYE | 04-09-1987 | JACOBS J.J.E.G. |

Office européen
des brevets

**RAPPORT DE RECHERCHE EUROPEENNE**

Numero de la demande

EP   87 20 1186

Page   2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 487 379 (KERNFORSCHUNGSZENTRUM KARLSRUHE GmbH) --- | | |
| A | US-A-4 459 268   (D.G. CLIFTON) --- | | |
| A | US-A-4 358 426   (O.K. TALLENT) --- | | |
| A | US-A-4 025 602   (D.O. CAMPBELL) --- | | |
| A | US-A-3 993 728   (W.W. SCHULZ) --- | | |
| A | US-A-3 781 404   (W.V. CONNER) --- | | DOMAINES TECHNIQUES RECHERCHES (Int. Cl.4) |
| A | US-A-3 359 079   (A. BATHELLIER) --- | | |
| A | US-A-2 982 600   (S. VOGLER) --- | | |
| A | US-A-2 951 740   (H.H. HOPKINS) ---        -/- | | |

Le présent rapport de recherche a été établi pour toutes les revendications

| Lieu de la recherche LA HAYE | Date d'achevement de la recherche 04-09-1987 | Examinateur JACOBS J.J.E.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

Office européen
des brevets

**RAPPORT DE RECHERCHE EUROPEENNE**

Numero de la demande

EP 87 20 1186

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 934 403 (M. ADER) | | |
| A | US-A-2 924 506 (H.H. ANDERSON) | | |
| A | US-A-2 867 640 (J.W. GOFMAN) | | |
| A | GB-A-2 152 271 (KERNFORSCHUNGSZENTRUM KARLSRUHE GmbH) | | |
| A | GB-A-2 011 697 (U.S. DEPT OF ENERGY) | | |
| A | GB-A-1 156 044 (GESELLSCHAFT FÜR KERNFORSCHUNG) | | DOMAINES TECHNIQUES RECHERCHES (Int. Cl.4) |
| A | GB-A- 991 418 (EUROCHEMIC) | | |

Le present rapport de recherche a été établi pour toutes les revendications

| Lieu de la recherche | Date d'achèvement de la recherche | Examinateur |
|---|---|---|
| LA HAYE | 04-09-1987 | JACOBS J.J.E.G. |